# EUROPÄISCHE PATENTSCHRIFT

(11) **EP 2 650 101 B1**
(45) Veröffentlichungstag und Bekanntmachung des Hinweises auf die Patenterteilung: **21.12.2016**
(21) Anmeldenummer: 13163121.0
(22) Anmeldetag: 10.04.2013
(51) Int. Cl.: B29C 49/42, B65G 39/06, B65G 47/14

(54) **Rollenförderer für Kunststoffvorformlinge**
Roller conveyor for plastic preforms
Convoyeur à rouleaux pour préformes en matière plastique

(30) Priorität: 10.04.2012 DE 102012103079
(43) Veröffentlichungstag der Anmeldung: 16.10.2013
(73) Patentinhaber: Krones AG, 93073 Neutraubling (DE)
(72) Erfinder: Seidl, Andreas, 93073 Neutraubling (DE); Seger, Martin, 93073 Neutraubling (DE)
(74) Vertreter: Bittner, Bernhard

(56) Entgegenhaltungen:
- EP-A1- 2 072 427
- EP-A2- 1 057 931
- EP-B1- 2 303 733
- DE-A1- 10 213 379
- US-A- 5 044 061
- US-A1- 2011 058 760

## Beschreibung

Die vorliegende Erfindung bezieht sich auf eine Vorrichtung zum Transportieren von Kunststoffbehältnissen insbesondere von Kunststoffvorformlingen. Aus dem Stand der Technik ist eine Vielzahl von Transportvorrichtungen zum Fördern von Kunststoffbehältnissen bekannt. Insbesondere sind auch Fördereinrichtungen zum Fördern von Kunststoffvorformlingen bekannt. Derartige Kunststoffvorformlinge werden üblicherweise im Herstellungsverfahren zunächst erwärmt und anschließend in einer Blasmaschine wie beispielsweise einer Streckblasmaschine zu Kunststoffbehältnissen umgeformt. Zu diesem Zweck ist es erforderlich, diese Kunststoffvorformlinge bereits sortiert, beispielsweise einem Eintaktrad, zu zu fördern. Aus dem Stand der Technik sind zu diesem Zweck so genannte Rollensortierer bekannt, welche zwei parallel zueinander angeordnete sich drehende Rollen aufweisen, zwischen denen die Kunststoffvorformlinge gefördert werden.

Eine derartige Vorrichtung wird beispielsweise in der DE 601 18 772 T2 beschrieben. Dabei ist auch eine Auswerfvorrichtung vorgesehen, welche ein Auswerfen von falsch orientierten Vorformlingen aus dem Transportsystem ermöglicht.

Die US 4,223,778 beschreibt einen weiteren "preform"-Förderer der oben bezeichneten Art. Dabei sind auch hier die Rollen in einem solchen Abstand zueinander angeordnet, dass nur die Endabschnitte der Vorformlinge in den durch die Rollen gebildeten Spalt fallen können, die Tragringe jedoch gehalten werden. Durch eine entsprechende Neigung dieser beiden Rollen können die Kunststoffvorformlinge unter Wirkung der Schwerkraft gefördert werden.

Die genannten Rollen derartiger Rollensortierer sind üblicherweise Metallrollen, die sehr exakt ausgewuchtet werden müssen.

In jüngerer Zeit werden vermehrt Kunststoffvorformlinge mit sehr kleinen Tragringen verarbeitet. Dies führt jedoch verstärkt zu Problemen mit den Rollengeometrien im Rollensortierer. Die Kunststoffvorformlinge rutschen dabei immer tiefer in den zwischen den beiden Rollen ausgebildeten Zwischenraum und können teilweise nicht mehr richtig geführt werden. Außerdem kommt es immer häufiger zu einer Verklemmung und auch das Gleitverhalten nimmt ab.

Der vorliegenden Erfindung liegt daher die Aufgabe zugrunde, derartige Rollensortierer insbesondere auch für problematische Kunststoffvorformlinge wie Kunststoffvorformlinge mit vergleichsweise geringen Tragringdurchmessern zu verbessern. Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Transportieren von Kunststoffbehältnissen und insbesondere von Kunststoffvorformlingen weist eine erste um ihre Längsachse drehbar angeordnete Rolle auf sowie auch eine zweite um ihre Längsachse drehbar angeordnete Rolle. Dabei sind die erste und die zweite Rolle derart zueinander angeordnet, dass zwischen diesen Rollen die Kunststoffbehältnisse transportiert werden können, wobei während des Transports das jeweilige Kunststoffbehältnis von beiden Rollen gestützt wird.

Erfindungsgemäß weist wenigstens eine Rolle einen aus einem ersten Material hergestellten Grundkörper auf sowie eine diesem Grundkörper in dessen Umfangsrichtung umgebende aus einem weiteren und sich von dem ersten Material unterscheidenden Materialhergestellte Schicht (bzw. allgemeiner einen den Grundkörper vollumfänglich umgebenden weiteren Körper), wobei diese Schicht als Kontaktschicht zum Kontaktieren der Kunststoffbehältnisse (während deren Transport) dient.

Vorteilhaft handelt es sich bei dem weiteren Material um einen Kunststoff, es wäre jedoch auch die Verwendung eines Metalls denkbar, wie unten erläutert wird.

Vorteilhaft sind beide Rollen in der beschriebenen Weise ausgeführt, weisen also den aus dem ersten Material hergestellten Grundkörper mit der besagten diesen Grundkörper umgebenen Kunststoffschicht auf. Vorteilhaft weist damit die Schicht einen ringförmigen Querschnitt auf. Auch der Grundkörper weist bevorzugt einen im Wesentlichen ringförmigen Querschnitt auf.

Vorteilhaft handelt es sich bei dem ersten Material um einen Kunststoff. Es wäre jedoch auch die Verwendung anderer Materialien wie etwa Aluminium denkbar. Unter unterschiedlichen Kunststoffen wird verstanden, dass sich das Material des Kunststoffs des Grundkörpers in wenigstens einer physikalischen Eigenschaft von dem Kunststoff der Schicht unterscheidet.

Vorteilhaft werden die Behältnisse in der Längsrichtung der Rollen transportiert und insbesondere werden die Behältnisse unter Einwirkung der Schwerkraft transportiert. Vorteilhaft gleiten dabei die Behältnisse bzw. Kunststoffvorformlinge wenigstens zeitweise an den Rollen in der Längsrichtung der Rollen entlang.

Vorteilhaft sind die Rollen derart zueinander beanstandet, dass ein Grundkörper der Kunststoffvorformlinge zwischen den Rollen hindurchtreten kann und somit während des Transports ein Sortiervorgang stattfindet.

Durch das Verwenden eines Kunststoffs für den Grundkörper kann die Rolle in ihrer Gesamtheit relativ leicht und dennoch stabil gestaltet werden. Auf diese Weise ist ein Auswuchten der Rollen nicht mehr so kritisch wie im Stand der Technik. Auch kann auf diese Weise auch die Umlaufgeschwindigkeit der Rollen erhöht werden. Weiterhin erlaubt die erfindungsgemäße Ausgestaltung eine sehr genaue Fertigung der Rollen, da jede Umwucht der hohen Rollendrehzahlen auch zu Störungen führen kann. Damit wird einerseits das Gewicht der Rolle reduziert und andererseits gleichwohl die Formstabilität gewährleistet.

Bei einer vorteilhaften Ausführungsform liegt eine Dicke der auf dem Grundkörper aufgetragenen bzw. angeordneten Schicht zwischen 0,1 mm und 10 mm, bevorzugt zwischen 0,1 mm und 3 mm und besonders bevorzugt zwischen 0,1 mm und 1 mm.

Durch das Vorsehen eines zweikomponentigen Materials, d. h. einerseits des Grundkörpers und andererseits der Schicht, kann ein spezielles Schichtmaterial ausgewählt werden, welches beispielsweise eine hohe Stabilität und gleichfalls eine geringe Reibung aufweist. Der Grundkörper kann indessen aus einem vergleichsweise kostengünstigen Material bestehen. Vorteilhaft weisen die beiden Rollen eine Neigung gegenüber einer Horizontalen auf, welche zwischen 5 Grad und 20 Grad, bevorzugt zwischen 6 Grad und 18 Grad und besonders bevorzugt zwischen 7 Grad und 15 Grad liegt.

Bei einer weiteren vorteilhaften Ausführungsform weisen die Rollen im Arbeitsbetrieb eine Umlaufgeschwindigkeit auf, welche größer ist als 300 U/min, bevorzugt größer als 350 U/min, bevorzugt größer als 400 U/min und besonders bevorzugt größer als 450 U/min.

Weiterhin ist bevorzugt ein Verhältnis zwischen der Länge der Rolle und einem Durchmesser der Rolle größer als 35, bevorzugt größer als 45, bevorzugt größer als 50 und bevorzug größer als 60.

Bei einer weiteren vorteilhaften Ausführungsform sind die Rollen im Wesentlichen parallel zueinander ausgebildet. Besonders bevorzugt ist dabei eine radiale Dicke der Schicht geringer ausgebildet als eine radiale Dicke des Grundkörpers. Die radiale Dicke des Grundkörpers liegt vorteilhaft zwischen 1 mm und 5 mm.

Bei einer weiteren vorteilhaften Ausführungsform ist wenigstens eine Antriebseinrichtung zum Antreiben der Rollen vorgesehen. Bevorzugt sind zwei Antriebseinrichtungen zum Antreiben der Rollen vorgesehen. Vorteilhaft weist wenigstens eine dieser Antriebseinrichtung einen Elektromotor auf. Vorteilhaft werden dabei die beiden Rollen gegenläufig angetrieben und zwar bevorzugt in der Weise, dass der Kunststoffvorformling durch die Drehung der Rollen entgegen seiner Schwerkraft angehoben wird.

Vorteilhaft kann als Schicht auch ein reibungsreduzierter und verschleißfester Lack aufgetragen werden, der zusätzlich noch mittels Strahlung ausgehärtet werden kann.

Besonders vorteilhaft weist die Schicht noch zusätzliche leitende Eigenschaften auf, damit keine statische Aufladung stattfindet.

Bei einer vorteilhaften Ausführungsform weist die Schicht einen strahlenbehandelten Kunststoff und/oder einen mit einer Vielzahl von Körpern und insbesondere einer Vielzahl von kugelartigen Körpern versetzten Kunststoff auf.

Bei beiden Maßnahmen kann eine besondere Stabilität und Reibarmut der jeweiligen Rolle erreicht werden.

Bei einer weiteren vorteilhaften Ausführungsform ist die Schicht aus einem Material hergestellt, welches aus einer Gruppe von Materialien ausgewählt ist, welche Polyamid (PA), Polyetherketon (PEEK), Polyoxymethylen (POM), ultra high molecular weight Polyethylen (UHMW-PE /PE-UHMW) und dergleichen enthält. Diese Materialien eignen sich besonders für die Schicht, insbesondere, wenn diese mit den kugelarteigen Körpern versetzt oder mittels Strahlen behandelt wurden, insbesondere, um eine sehr reibarme Schicht zur Verfügung zu stellen. Vorzugsweise ist das Kunststoffmaterial durch Strahlen behandelt und weist zudem eine Vielzahl der oben genannten insbesondere kugelartigen Körper auf.

So ist es möglich, dass die Oberflächenstruktur des Materials durch eine Vielzahl von kugelförmigen Elementen gebildet wird oder eine solche aufweist, die in einem Grundmaterial und/oder Trägermaterial der Führungseinrichtung oder eines Führungseinsatzes eingebettet sind. Vorteilhaft sind dabei diese Elemente, insbesondere kugelförmigen Elemente, aus einem Material hergestellt, welches aus einer Gruppe von Materialien ausgewählt ist, welche Glas- oder Keramikkugeln und dergleichen, vorzugsweise unipolare Füllstoffe, enthält.

Vorteilhaft weisen dabei diese zusätzlichen Körper, beispielsweise kugelförmigen Körper jeweils Querschnitte, bzw. Volumina auf, die einen Durchmesser kleiner 1 mm, vorzugsweise kleiner 0,1 mm und besonders vorzugsweise kleiner 0,01 mm aufweisen.

Vorteilhaft beträgt ein Gewichtsanteil dieser kugelförmigen Körper gegenüber dem Gesamtmaterial mehr als 5 %, vorzugsweise mehr als 10 % und besonders vorzugsweise mehr als 20%.

Die Anmelderin hat weiterhin herausgefunden, dass strahlenbehandelte Kunststoffe (wie sie oben genannt wurden), insbesondere strahlenvernetzte Kunststoffe, eine wesentlich verbesserte Eigenschaft, insbesondere hinsichtlich der Reibeigenschaften haben. Ein derartiges Bestrahlen von Kunststoffmaterialien ist bereits seit längerem bekannt. Ursprünglich war nach einem geeigneten Isolationsmaterial für Kabel gesucht worden. Dabei wurde herausgefunden, dass eine Bestrahlung bestimmter Kunststoffe durch Strahlung eine Vernetzung des Kunststoffes induziert und daneben auch eine Degradation von Polymeren. Unter einer Vernetzung wurde ursprünglich eine Reaktion verstanden, bei der eine Vielzahl einzelner Makromoleküle zu einem dreidimensionalen Netz verknüpft wird. Dabei verändern sich die Eigenschaften des Materials. Ziel ist es, dabei beispielsweise Polymerwerkstoffen eine größere Härte oder auch Temperaturbeständigkeit zu verleihen.

Vorteilhaft wird bei der Strahlenbehandlung eine genau ermittelte Energiemenge in den Kunststoff eingebracht, wobei beispielsweise Elektronenbeschleuniger unterschiedlicher Leistung (für Beta-Strahlen) oder auch eine Kobalt-60 Quelle (für Gamma-Strahlen) eingesetzt werden kann.

Die Anmelderin hat festgestellt, dass auch diese Einwirkung ionisierender Strahlung für die Behandlung mit Lebensmitteln unbedenklich ist, da durch ionisierende Strahlung in Kunststoffen selbst keine Radioaktivität erzeugt wird.

Bei einer weiteren vorteilhaften Ausführungsform ist die Schicht aus einem Material hergestellt, welches Fluorpolymere enthält. Deartige Materialien wie etwa PTFE (Polytetrafluorethylen), PFA (Perfluoroalkozy) oder FEP (Fluorinated ethylene propylene) weisen eine relativ niedrige Adhäsionsneigung auf, bzw. eine hohe Antihaftwirkung. PFA und FEP sind Copolymere von PTFA. Dabei ist es möglich, zur Beschichtung die genannten Materialien in Reinform zu verwenden, bevorzugt kann jedoch zur Haftverbesserung eine sog. Primerschicht aufgebracht werden. Daneben könnte auch ein Primersystem aufgebracht werden, welches auch mehrere Schichten aufweisen kann.

So wäre es möglich, in den Beschichtungssystemen Haftvermittler - Additive, wie beispielsweise Pigmente, Hitzestabilisatoren und/oder Bindeharze einzusetzen. Daneben können auch weitere Komponenten in die Beschichtung eingelagert werden wie etwa harte, abriebsfeste Komponenten. In diesem Fall kann auch die Schichtdicke erhöht werden.

Bei einer weiteren vorteilhaften Ausführungsform enthält die Schicht ein Metall oder ist eine Metallschicht. Insbesondere handelt es sich hier um eine mittels eines (Metall) Flammspritzens aufgebrachte Schicht. Das Flammspritzen gehört zu den thermischen Beschichtungsverfahren. Mit diesem Verfahren können pulver- draht-, schnur- und stabförmige Werkstoffe verarbeitet und auf Bauteiloberflächen aufgespritzt werden. Daneben können jedoch auch Keramiken oder Kunststoffe mit diesem Verfahren aufgespritzt werden.

Bei den Kunststoffbehältnissen handelt es sich insbesondere um PET-Behältnisse. Bevorzugt handelt es sich bei der Strahlenbehandlung der Kunststoffe insbesondere um ein Bestrahlen bzw. Vernetzen dieser Kunststoffe durch Gamma- und/oder Beta-Strahlen. Vorteilhaft weist daher zumindest die den Behältnissen zugewandte Führungsfläche einen durch Strahlung behandelt Kunststoff auf. Bei einer weiteren vorteilhaften Ausführungsform ist die Führungseinrichtung aus wenigstens zwei Komponenten aufgebaut.

Ein wesentlicher Unterschied zwischen diesen beiden Strahlungsarten besteht in der Durchdringungsfähigkeit und der Dosisleistung. In Anlagen mit Elektronenbeschleunigern wird mit hohen Dosisleistungen gearbeitet, aber mit einer von der Energie abhängigen beschränkten Eindringtiefe. Durch die mittlerweile verfügbaren Beschleunigeranlagen mit hoher Elektronenenergie können auch größere Bauteile mit Elektronen "durchstrahlt" werden.

Gamma-Strahlen hingegen weisen eine hohe Durchdringungsfähigkeit bei einer relativ geringen Dosisleistung auf. Anwendungstechnisch bedeutet dies, dass in den Elektronenbeschleunigern die Dosis innerhalb von Sekunden auf das Strahlgut aufgebracht wird, während dafür in einer Gamma-Anlage mehrere Stunden benötigt werden.

Insbesondere bei kompakt aufgebauten Formteilen können wiederum Gamma-Strahlen einen größeren Vorteil aufweisen. Vorteilhaft werden bei Bestrahlung des Materials Elektronenstrahlen eingesetzt.

Bei einer weiteren vorteilhaften Ausführungsform weist der Grundkörper ein Karbonfasern enthaltendes Material auf und besteht besonders bevorzugt aus einem Karbonfasern enthaltenden Material, insbesondere einem Karbonfasermaterial. Ein derartiges Karbonfasern enthaltendes Material ist besonders leichtgewichtig sowie formstabil und daher als Ausgangsmaterial für die Rolle gut geeignet. Insbesondere wird daher Karbon als Rollenkern ausgewählt. Jedoch hat Karbon den Nachteil, dass dessen Reibwerte relativ hoch sind und dabei ein Gleiten der Kunststoffvorformlinge beispielsweise bei einem Gefälle von 9 Grad nicht zulässt. Daher wird der besagte Karbonkern bzw. Grundkörper mit einem Kunststoff überzogen, der gezielt die Reibwerte herabsetzt. Die oben genannten Schichten eignen sich hierfür in besonderer Weise.

Bei einer weiteren vorteilhaften Ausführungsform weist der Grundkörper einen glasfaserverstärkten Kunststoff (GFK) auf. Ein derartiges GFK-Material ist besonders leichtgewichtig und formstabil, daher als Ausgangsmaterial für die Rolle ebenfalls gut geeignet. Insbesondere wird daher GFK auch als Rollenkern ausgewählt, hat aber ebenfalls den Nachteil, dass dessen Reibwerte relativ hoch sind und dabei ein Gleiten der Kunststoffvorformlinge beispielsweise bei einem Gefälle von 9 Grad nicht zulässt.

Auf diese Weise kann insgesamt der Rollendurchmesser verringert werden und gleichzeitig auch dessen Oberfläche reibungsoptimiert werden.

Bei einer weiteren vorteilhaften Ausführungsform ist der Grundkörper als Hohlkörper ausgebildet. Auch auf diese Weise kann die Masse der gesamten Rolle reduziert werden.

Besonders vorteilhaft weist wenigstens eine Rolle und weisen bevorzugt beide Rollen einen Durchmesser auf, der zwischen 30 mm und 90 mm, bevorzugt zwischen 35 mm und 60 mm und besonders bevorzugt zwischen 35 mm und 50 mm liegt.

Bei einer weiteren vorteilhaften Ausführungsform weist die Vorrichtung eine Auswurfeinrichtung zum Auswerfen bzw. Ausschleusen von Kunststoffvorformlingen und insbesondere zum Auswerfen bzw. Ausschleusen von fehlerhaft orientierten Kunststoffvorformlingen auf. Dabei kann beispielsweise ein oberhalb des Transportpfades der Kunststoffvorformlinge angeordnetes Kickerrad vorgesehen sein, welches falsch orientierte Kunststoffvorformlinge oder auch ineinandersteckende Kunststoffvorformlinge auswirft.

Daneben kann auch ein Niederhalterelement vorgesehen sein, welches die Kunststoffvorformlinge genauer gegenüber den beiden Rollen orientiert.

Die vorliegende Erfindung ist weiterhin auf einer Transportrolle für eine Vorrichtung der oben beschriebenen Art gerichtet. Dabei weist diese Rolle einen aus einem ersten Material und insbesondere aus einem Kunststoff hergestellten Grundkörper auf sowie eine diesen Grundkörper in dessen Umfangrichtung umgebende aus einem weiteren und sich von dem ersten Kunststoff unterscheidenden Kunststoff hergestellte Schicht. Diese Schicht dient dabei als Kontaktschicht zum Kontaktieren der Kunststoffbehältnisse. Damit wird auch hinsichtlich der Transportrolle vorgeschlagen, dass diese aus einem bestimmten Material für einen Grundkörper besteht und einer um diesen Grundkörper angeordneten Schicht. Vorteilhaft umgibt diese Schicht den Grundkörper in Umfangsrichtung vollständig und deckt ihn besonders bevorzugt auch in dessen Längsrichtung vollständig ab.

In einer vorteilhaften Ausführungsform weist der Grundkörper einen Karbonfasern enthaltenen Kunststoff auf und/oder die Schicht einen strahlenbehandelten Kunststoff und/oder eine mit einer Vielzahl von kugelartigen Körpern versetzten Kunststoff.

Die vorliegende Erfindung bezieht sich weiterhin auf ein Verfahren zum Transportieren von Kunststoffbehältnissen und insbesondere von Kunststoffvorformlingen. Dabei werden die Kunststoffvorformlinge zwischen einer ersten sich wenigstens zeitweise um ihre Längsachse drehenden Rolle und einem zweiten Tragekörper transportiert, wobei die Kunststoffvorformlinge während ihres Transports sowohl von der ersten Rolle als auch von dem zweiten Tragekörper gestützt werden.

Erfindungsgemäß weist wenigstens die erste Rolle und/oder der zweite Tragekörper einen aus einem ersten Material hergestellten Grundkörper aufweist, sowie eine diesen Grundkörper in dessen Umfangsrichtung (im Falle des Tragekörper zumindest teilweise) umgebende, aus einem weiteren und sich von dem ersten Material unterscheidenden Material hergestellte Schicht, wobei diese Schicht die Kunststoffvorformlinge während ihres Transports wenigstens zeitweise kontaktiert.

Es wird daher auch verfahrensseitig vorgeschlagen, dass die Kunststoffbehältnisse und insbesondere Kunststoffvorformlinge gegenüber einer Beschichtung der oben beschriebenen Art bewegt werden. Dabei werden die Kunststoffvorformlinge bevorzugt unterhalb ihres Tragrings von der Rolle und dem Tragekörper gestützt.

Bei einem weiteren vorteilhaften Verfahren ist der zweite Tragekörper ebenfalls eine Rolle, welche sich wenigstens zeitweise um ihre Längsachse dreht. Es wäre jedoch auch möglich, dass es sich bei dem zweiten Tragekörper um eine Leiste und insbesondere eine geradlinig verlaufende Leiste handelt.

Vorteilhaft werden die Kunststoffvorformlinge auch unter Wirkung der Schwerkraft gefördert, bzw. wenigstens teilweise entlang eines abfallenden Transportpfads.

Weitere Vorteile und Ausführungsformen ergeben sich aus den beigefügten Zeichnungen:
Darin zeigen:
   - Fig. 1: eine teilweise Darstellung eines Rollensortierers nach dem Stand der Technik;
   - Fig. 2: eine schematische Darstellung einer erfindungsgemäßen Rolle;
   - Fig. 3: eine schematische Darstellung eines Transports eines Kunststoffvorformlings zwischen zwei Rollen;
   - Fig. 4: eine schematische Seitenansicht eines erfindungsgemäßen Rollensortierers;
   - Fig. 5: eine Ansicht der in Fig. 4 gezeigten Vorrichtung entlang der Längsrichtung der Rollen.
   - Fig. 6a,b: eine vorteilhafte Ausgestaltung eines Materials für die Schicht; und
   - Fig. 7a,b: eine weitere vorteilhafte Ausgestaltung eines Materials für die Schicht.

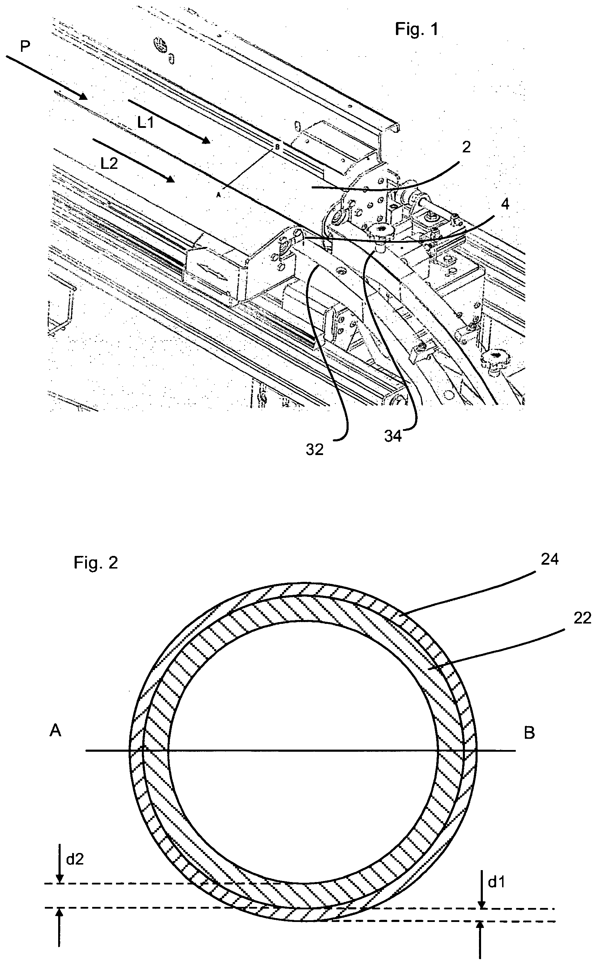

Fig. 1 zeigt eine schematische Ansicht einer erfindungsgemäßen Vorrichtung bzw. eines Rollensortierers 1 nach dem Stand der Technik. Dabei sind zwei Rollen 2 und 4 vorgesehen (die Rolle 4 ist nur zu einem geringen Teil sichtbar, da sie im Übrigen verdeckt ist), die parallel zueinander angeordnet sind. Zwischen diesen beiden Rollen 2 und 4 können die Kunststoffvorformlinge entlang eines vorgegebenen Transportpfades P transportiert werden. Vorteilhaft werden die Kunststoffvorformlinge durch den Rollensortierer geradlinig transportiert. Die Bezugszeichen L1 und L2 beziehen sich auf die Längsrichtungen der Rollen 2, 4

Die Kunststoffvorformlinge können dabei beispielsweise von einer Schütte (nicht gezeigt) zu diesen beiden Rollen 2,4 gelangen und richten sich im Laufe des Transports derart aus, dass deren Tragringe von den beiden Rollen 2, 4 gestützt werden und die Grundkörper der Kunststoffvorformlinge sich zwischen den Rollen bewegen. An die beiden Rollen 2, 4 schließen sich Abführschienen 32, 34 an, zwischen denen die Kunststoffvorformlinge (bevorzugt wieder unter Wirkung der Schwerkraft) weiter gefördert werden können.

Fig. 2 zeigt eine schematische Darstellung einer erfindungsgemäßen Rolle. Diese Rolle weist hier einen Grundkörper 22 auf, der insbesondere aus Karbonfasern hergestellt ist. Dieser Grundkörper 22 ist von einer diesen vollständig umgebenden Schicht 24 eingeschlossen. Eine radiale Dicke d1 dieser Schicht 24 ist dabei geringer als eine radiale Dicke d2 des Grundkörpers 22. Daneben können auch noch Stege (nicht gezeigt) vorgesehen sein, welche radial nach innen ragen, damit die Rolle um ihre Längsrichtung L1 (die sich hier senkrecht zu der Figurenebene erstreckt) rotativ angetrieben werden kann. Die Bezugszeichen A und B kennzeichnen den Durchmesser der Rolle 2. Die Rolle 4 ist bevorzugt entsprechend ausgeführt.

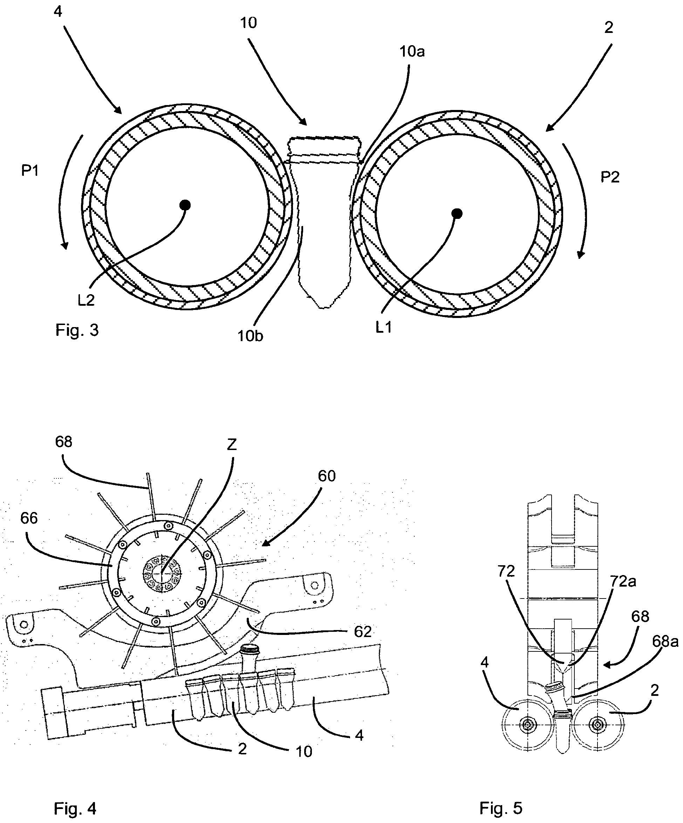

Fig. 3 veranschaulicht den Transport der Kunststoffvorformlinge 10 durch die beiden Rollen 2 und 4. Dabei wird der Kunststoffvorformling 10 zwischen den beiden Rollen geführt und nur deren Tragring 10a stützt sich an den beiden Rollen 2, 4 ab. Idealerweise berührt der Grundkörper 10b der Kunststoffvorformlinge 10 die beiden Rollen nicht oder nur gelegentlich. Dennoch ist jedoch vorteilhaft die Schicht 24 derart gestaltet, dass ein Reibungswiderstand mit den Kunststoffvorformlingen möglichst gering ist. Die Bezugszeichen P1 und P2 veranschaulichen die Drehrichtungen der beiden Rollen 2, 4. Durch diese gegenläufige Drehung werden die Kunststoffvorformlinge, wie an sich aus dem Stand der Technik bekannt, besser ausgerichtet. Die Bezugszeichen L1 und L2 beziehen sich auf die Längsrichtungen der Kunststoffvorformlinge 10, welche hier senkrecht zu der Figurenebene stehen. Auch der Transportpfad der Kunststoffvorformlinge 10 verläuft hier senkrecht zu der Figurenebene.

Fig. 4 zeigt eine weitere schematische Darstellung einer erfindungsgemäßen Vorrichtung 1. Man erkennt, dass hier oberhalb der beiden Rollen 2, 4 und damit auch oberhalb des Transportpfads der Kunststoffvorformlinge 10 eine in ihrer Gesamtheit mit 60 bezeichnete Auswurf- bzw. Ausschleuseinrichtung vorgesehen ist. Diese Auswurfeinrichtung weist ein bezüglich einer Achse Z drehbares Rad 66 auf, an dem eine Vielzahl von (radial) nach aussen ragenden Auswurfelementen 68 angeordnet sind, die sich damit ebenfalls um die Achse Z drehen. Falls ein Kunststoffvorformling schlecht orientiert ist, beispielsweise, wie in der Figur gezeigt in einem anderen Kunststoffvorformling 10 steckt, kann er von einem Auswurfelement 68 erfasst und ausgeworfen werden. Es wären jedoch auch andere Arten von Auswurfmechanismen denkbar. So wäre es möglich, dass eine der Rollen 2, 4 oder ein Segment einer Rolle 2, 4 senkrecht zu dem Transportpfad der Kunststoffvorformlinge verschoben wird, so dass der entsprechende Kunststoffvorformling nach unten aus dem Sortierer herausfallen kann.

Das Bezugszeichen 62 bezieht sich auf ein Niederhalterelement, welches ebenfalls zum Auswerfen schlecht orientierter Kunststoffvorformlinge dienen kann.

Fig. 5 zeigt eine entsprechende weitere Ansicht der in Fig. 4 gezeigten Vorrichtung. Man erkennt hier wiederum das Auswurfelement 68, welches direkt oberhalb des Transportpfads der Kunststoffvorformlinge eine Ausnehmung 68a aufweist, so dass korrekt transportierte Kunststoffvorformlinge nicht von diesem Auswurfelement erfasst werden können. Das Bezugszeichen 72 kennzeichnet eine Führungsschiene mit Schrägflächen 72a. Falls ein Kunststoffvorformling mit nicht korrekter Orientierung gefördert wird, wird er durch diese Führungsschiene seitlich gedrängt und kann dann von dem Auswurfelement 68 ausgeworfen werden.

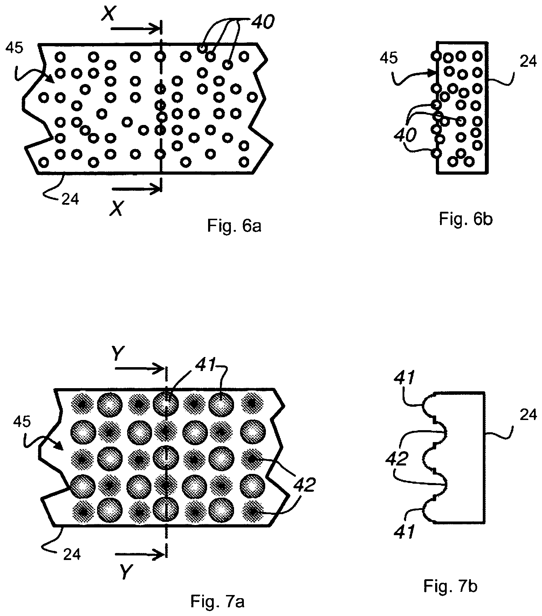

Die Figuren 6a, 6b zeigen eine weitere Ausgestaltung eines erfindungsgemäßen Materials, welches insbesondere für die Schicht 24 Anwendung finden kann. Hier ist in den Grundkörper 45 des Materials der Schicht 24 eine Vielzahl von hier im Wesentlichen kugelförmigen Körpern 40 eingebettet. Fig. 6b zeigt eine Ansicht des Körpers aus Fig. 6a entlang der Pfeile X-X aus Fig. 6. Man erkennt, dass hier durch diese einzelnen kugelförmigen Körper 40 eine Kontaktfläche ausgebildet ist. Die Erhöhungen, die durch die kugelförmigen Körper 40 verursacht werden, sind hier halbkugelförmig dargestellt, die Erfindung ist jedoch nicht hierauf beschränkt. Insgesamt entsteht jedoch auf diese Weise eine hügelige Führungsfläche und es konnte gezeigt werden, dass diese hügelige Führungsfläche den Reibwert der Oberfläche der Rolle 2, 4 bzw. der Schicht herabsenkt.

Allgemein ist bevorzugt dieses Einbetten der kugelförmigen Körper auch mit einer Strahlvernetzung des Kunststoffmaterials kombiniert. Daneben können auch zusätzliche Verstärkungselemente vorgesehen sein, die das Material des Kunststoffes insgesamt verstärken.

Die Figuren 7a, 7b zeigen eine weitere Ausführungsform, bei welcher in dem Material Erhöhungen 41 und/oder Vertiefungen 42 vorgesehen sind. Dabei können diese Erhöhungen und Vertiefungen auch als gleichmäßige Rillen oder Nuten oder mit einer anderen Profilierung vorgesehen sein. Insgesamt wird hierdurch erreicht, dass die resultierende Oberfläche der Rolle 2,4 bzw. der Schicht welche in Kontakt mit den Kunststoffvorformlingen stehen kann eine insgesamt geringere Anlagefläche im Kontaktbereich mit den Kunststoffbehältnissen aufweist.

Die Anmelderin behält sich vor, sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 2, 4: Rollen
- 10: Kunststoffvorformling
- 10a: Tragring des Kunststoffvorformlings
- 10b: Grundkörper des Kunststoffvorformlings
- 22: Grundkörper der Rolle
- 24: Schicht
- 32, 34: Abführschienen
- 40: kugelförmiger Körper
- 41: Erhöhungen

- 42: Vertiefungen
- 45: Grundkörper des Materials der Schicht
- 60: Auswurfeinrichtung
- 66: drehbares Rad
- 68: Auswurfelemente
- 68a: Ausnehmung
- 72: Führungsschiene
- 72a: Schrägflächen der Führungsschiene
- d1, d2: Dicken
- P: Transportpfad
- P1, P2: Drehrichtungen der Rollen
- Z: Achse
- L1, L2: Längsrichtungen der Rollen

## Patentansprüche

1. Vorrichtung (1) zum Transportieren von Kunststoffbehältnissen (10) und insbesondere von Kunststoffvorformlingen (10) mit einer ersten um ihre Längsachse (L1) drehbar angeordneten Rolle (2), mit einer zweiten um ihre Längsachse (L2) drehbar angeordneten Rolle (4), wobei die erste Rolle (2) und die zweite Rolle (4) derart zueinander angeordnet sind, dass zwischen diesen Rollen (2, 4) die Kunststoffbehältnisse (10) transportiert werden können, wobei während des Transports das Kunststoffbehältnis (10) von beiden Rollen (2, 4) gestützt wird, **dadurch gekennzeichnet, dass**
wenigstens eine Rolle (2, 4) einen aus einem ersten Material hergestellten Grundkörper (22) aufweist, sowie eine diesen Grundkörper (22) in dessen Umfangsrichtung umgebende, aus einem weiteren und sich von dem ersten Material unterscheidenden Material hergestellte Schicht (24), wobei diese Schicht (24) als Kontaktschicht zum Kontaktieren der Kunststoffbehältnisse (10) dient, wobei
- der Grundkörper (22) ein Karbonfasern enthaltendes Material aufweist und/oder der Grundkörper (22) als Hohlkörper (22) ausgebildet ist,
- die Rollen (2, 4) im Arbeitsbetrieb eine Umlaufgeschwindigkeit aufweisen, welche größer ist als 400 U/min ist,
- ein Verhältnis zwischen der Länge der Rolle (2, 4) und einem Durchmesser der Rolle (2, 4) größer als 35, und wobei
- wenigstens eine Rolle (2, 4) einen Durchmesser zwischen 30 mm und 90 mm aufweist.

2. Vorrichtung (1) nach Anspruch 1,
**dadurch gekennzeichnet, dass**
die Schicht (24) einen strahlenbehandelten Kunststoff und/oder einen mit einer Vielzahl von kugelartigen Körpern (40) versetzten Kunststoff aufweist.

3. Vorrichtung (1) nach wenigstens einem der vorangegangenen Ansprüche,
**dadurch gekennzeichnet, dass**
die Schicht (24) aus einem Material hergestellt ist, welches aus einer Gruppe von Materialen ausgewählt ist, welche PA, PEEK, POM, UHMW-PE und dergleichen enthält.

4. Vorrichtung (1) nach wenigstens einem der vorangegangenen Ansprüche,
**dadurch gekennzeichnet, dass**
die Schicht (24) aus einem Material hergestellt ist, welches Fluorpolymere enthält.

5. Vorrichtung (1) nach wenigstens einem der vorangegangenen Ansprüche,
**dadurch gekennzeichnet, dass**
die Schicht (24) ein Metall enthält oder eine Metallschicht ist.

6. Vorrichtung (1) nach wenigstens einem der vorangegangenen Ansprüche,
**dadurch gekennzeichnet, dass**
der Grundkörper (22) einen glasfaserverstärkten Kunststoff (GFK) aufweist.

7. Vorrichtung (1) nach wenigstens einem der vorangegangenen Ansprüche,
**dadurch gekennzeichnet, dass**
die Vorrichtung (1) eine Auswurfeinrichtung (60) zum Auswerfen der Kunststoffvorformlinge (10) aufweist.

8. Transportrolle (2, 4) für eine Vorrichtung (1) nach wenigstens einem der vorangegangenen Ansprüche,
**dadurch gekennzeichnet, dass**
die Rolle (2,4) einen aus einem Kunststoff hergestellten Grundkörper (22) aufweist, sowie eine diesen Grundkörper (22) in dessen Umfangsrichtung umgebende, aus einem weiteren und sich von dem ersten Kunststoff unterscheidenden Kunststoff hergestellte Schicht (24) aufweist, wobei diese Schicht (24) als Kontaktschicht zum Kontaktieren der Kunststoffbehältnisse (10) dient
- die Rollen (2, 4) im Arbeitsbetrieb eine Umlaufgeschwindigkeit aufweisen, welche größer ist als 400 U/min ist,
- ein Verhältnis zwischen der Länge der Rolle (2, 4) und einem Durchmesser der Rolle (2, 4) größer als 35, und wobei
- wenigstens eine Rolle (2, 4) einen Durchmesser zwischen 30 mm und 90 mm aufweist.

9. Transportrolle (2, 4) nach Anspruch 8,
**dadurch gekennzeichnet, dass**
der Grundkörper (22) einen Karbon-Fasern enthaltenden Kunststoff aufweist und/oder die Schicht (24) einen strahlenbehandelten Kunststoff und/oder einen mit einer Vielzahl von kugelartigen Körpern (40) versetzten Kunststoff aufweist.

10. Verfahren zum Transportieren von Kunststoffvorformlingen, wobei die Kunststoffvorformlinge zwischen einer ersten sich wenigstens zeitweise um ihre Längsachse (L1) drehenden Rolle (2) und einem zweiten Tragekörper (4) transportiert werden, wobei die Kunststoffvorformlinge während ihres Transports sowohl von der ersten Rolle (2) als auch von dem zweiten Tragekörper gestützt werden,
**dadurch gekennzeichnet, dass**
wenigstens die erste Rolle (2) oder der zweite Tragekörper einen aus einem ersten Material hergestellten Grundkörper (22) aufweist, sowie eine diesen Grundkörper (22) in dessen Umfangsrichtung umgebende, aus einem weiteren und sich von dem ersten Material unterscheidenden Material hergestellte Schicht (24), wobei diese Schicht (24) die Kunststoffvorformlinge während ihres Transports wenigstens zeitweise kontaktiert, wobei der Grundkörper (22) ein Karbonfasern enthaltendes Material aufweist und/oder der Grundkörper (22) als Hohlkörper (22) ausgebildet ist, wobei
- die Rollen (2, 4) im Arbeitsbetrieb eine Umlaufgeschwindigkeit aufweisen, welche größer ist als 400 U/min ist,
- ein Verhältnis zwischen der Länge der Rolle (2, 4) und einem Durchmesser der Rolle (2, 4) größer als 35, und wobei
- wenigstens eine Rolle (2, 4) einen Durchmesser zwischen 30 mm und 90 mm aufweist.

11. Verfahren nach Anspruch 10,
**dadurch gekennzeichnet, dass**
der zweite Tragekörper (4) eine Rolle (4) ist, welche sich wenigstens zeitweise um ihre Längsachse (L2) dreht.

12. Verfahren nach Anspruch 10,
**dadurch gekennzeichnet, dass**
die Schicht (24) einen strahlen behandelten Kunststoff und/oder einen mit einer Vielzahl von kugelartigen Körpern (40) versetzten Kunststoff aufweist.

13. Vorrichtung (1) zum Transportieren von Kunststoffbehältnissen (10) und insbesondere von Kunststoffvorformlingen (10) mit einer ersten um ihre Längsachse (L1) drehbar angeordneten Rolle (2), mit einer zweiten um ihre Längsachse (L2) drehbar angeordneten Rolle (4), wobei die erste Rolle (2) und die zweite Rolle (4) derart zueinander angeordnet sind, dass zwischen diesen Rollen (2, 4) die Kunststoffbehältnisse (10) transportiert werden können, wobei während des Transports das Kunststoffbehältnis (10) von beiden Rollen (2, 4) gestützt wird, **dadurch gekennzeichnet, dass**
wenigstens eine Rolle (2, 4) einen aus einem ersten Material hergestellten Grundkörper (22) aufweist, sowie eine diesen Grundkörper (22) in dessen Umfangsrichtung umgebende, aus einem weiteren und sich von dem ersten Material unterscheidenden Material hergestellte Schicht (24), wobei diese Schicht (24) als Kontaktschicht zum Kontaktieren der Kunststoffbehältnisse (10) dient, wobei die Schicht (24) einen strahlenbehandelten Kunststoff und/oder einen mit einer Vielzahl von kugelartigen Körpern (40) versetzten Kunststoff aufweist, wobei
- die Rollen (2, 4) im Arbeitsbetrieb eine Umlaufgeschwindigkeit aufweisen, welche größer ist als 400 U/min ist,
- ein Verhältnis zwischen der Länge der Rolle (2, 4) und einem Durchmesser der Rolle (2, 4) größer als 35, und wobei
- wenigstens eine Rolle (2, 4) einen Durchmesser zwischen 30 mm und 90 mm aufweist.

## Claims

1. An apparatus (1) for conveying the conveying of plastics material containers (10) and, in particular, plastics material pre-forms (10) with a first roller (2) arranged so as to be rotatable about its longitudinal axis (L1), with a second roller (4) arranged so as to be rotatable about its longitudinal axis (L2), wherein the first roller (2) and the second roller (4) are arranged with respect to each other in such a way that the plastics material containers (10) can be conveyed between these rollers (2, 4), wherein the plastics material container (10) is supported by the two rollers (2, 4) during the conveying, **characterized in that**
at least one roller (2, 4) has a main body (22) produced from a first material and a layer (24) which surrounds this main body (22) in its peripheral direction and which is produced from a further material differing from the first material, wherein this layer (24) acts as a contact layer for contacting the plastics material containers (10), wherein
- the main body (22) has a material containing carbon fibers and/or the main body (22) is designed in the form of a hollow body (22),
- in working operation the rollers (2, 4) have a rotational speed which is greater than 400 r.p.m.,
- a ratio between the length of the roller (2, 4) and a diameter of the roller (2, 4) is greater than 35, and wherein
- at least one roller (2, 4) has a diameter between 30 mm and 90 mm.

2. An apparatus (1) according to claim 1,
**characterized in that**
the layer (24) has a plastics material treated by means of radiation and/or a plastics material mixed with a plurality of sphere-like bodies (40).

3. An apparatus (1) according to at least one of the preceding claims,
**characterized in that**
the layer (24) is produced from a material which is chosen from a group of materials which contains PA, PEEK, POM, UHMW PE and the like.

4. An apparatus (1) according to at least one of the preceding claims, **characterized in that**
the layer (24) is produced from a material which contains fluoropolymers.

5. An apparatus (1) according to at least one of the preceding claims,
**characterized in that**
the layer (24) contains a metal or is a metallic layer.

6. An apparatus (1) according to at least one of the preceding claims,
**characterized in that**
the main body (22) has a glass-fibre-reinforced plastics material (GFP).

7. An apparatus (1) according to at least one of the preceding claims,
**characterized in that**
the apparatus (1) has an ejection device (60) for ejecting the plastics material pre-forms (10).

8. A conveying roller (2, 4) for an apparatus (1) according to at least one of the preceding claims,
**characterized in that**
the roller (2, 4) has a main body (22) produced from a plastics material, and a layer (24) surrounding this main body (22) in the peripheral direction thereof and produced from a further plastics material different from the first plastics material, wherein this layer (24) is used as a contact layer for contacting the plastics material containers (10)
- in working operation the rollers (2, 4) have a rotational speed which is greater than 400 r.p.m.
- a ratio between the length of the roller (2, 4) and a diameter of the roller (2, 4) is greater than 35, and wherein
- at least one roller (2, 4) has a diameter between 30 mm and 90 mm.

9. A conveying roller (2, 4) according to claim 8,
**characterized in that**
the main body (22) has a plastics material containing carbon fibers and/or the layer (24) has a plastics material treated by means of radiation and/or a plastics material mixed with a plurality of sphere-like bodies (40).

10. A Method of conveying plastics material pre-forms, wherein the plastics material pre-forms are conveyed between a first roller (2) rotating at least for a time about its longitudinal axis (L1) and a second carrier body (4), wherein the plastics material pre-forms are supported during the conveying thereof both by the first roller (2) and by the second carrier body,
**characterized in that**
at least the first roller (2) or the second carrier body has a main body (22) produced from a first material, and a layer (24) surrounding this main body (22) in the peripheral direction thereof and produced from a further material different from the first material, wherein this layer (24) contacts the plastics material pre-forms at least for a time during the conveying thereof wherein the main body (22)has a material containing carbon fibers and/or the main body (22) is designed in the form of a hollow body (22), wherein
- in working operation the rollers (2, 4) have a rotational speed which is greater than 400 r.p.m.,
- a ratio between the length of the roller (2, 4) and a diameter of the roller (2, 4) is greater than 35, and wherein
- at least one roller (2, 4) has a diameter between 30 mm and 90 mm.

11. A method according to claim 10,
**characterized in that**
the second carrier body (4) is a roller (4) which rotates about the longitudinal axis (L2) thereof at least for a time.

12. A method according to claim 10,
**characterized in that**
the layer (24) has a plastics material treated by means of radiation and/or a plastics material mixed with a plurality of sphere-like bodies (40).

13. An apparatus (1) for conveying the conveying of plastics material containers (10) and, in particular, plastics material pre-forms (10) with a first roller (2) arranged so as to be rotatable about its longitudinal axis (L1), with a second roller (4) arranged so as to be rotatable about its longitudinal axis (L2), wherein the first roller (2) and the second roller (4) are arranged with respect to each other in such a way that the plastics material containers (10) can be conveyed between these rollers (2, 4), wherein the plastics material container (10) is supported by the two rollers (2, 4) during the conveying, **characterized in that**
at least one roller (2, 4) has a main body (22) produced from a first material and a layer (24) which surrounds this main body (22) in its peripheral direction and which is produced from a further material differing from the first material, wherein this layer (24) acts as a contact layer for contacting the plastics material containers (10), wherein the layer (24) has a plastics material treated by means of radiation and/or a plastics material mixed with a plurality of sphere-like bodies (40), wherein
- in working operation the rollers (2, 4) have a rotational speed which is greater than 400 r.p.m.,
- a ratio between the length of the roller (2, 4) and a diameter of the roller (2, 4) is greater than 35, and wherein
- at least one roller (2, 4) has a diameter between 30 mm and 90 mm.

## Revendications

1. Dispositif (1) pour le transport de récipients en matière plastique (10) et en particulier de préformes en matière plastique (10) avec un premier rouleau (2) agencé de manière rotative autour de son axe longitudinal (L1), avec un second rouleau (4) agencé de manière rotative autour de son axe longitudinal (L2), dans lequel le premier rouleau (2) et le second rouleau (4) sont agencés l'un par rapport à l'autre de telle manière qu'entre ces rouleaux (2, 4), les récipients en matière plastique (10) puissent être transportés, dans lequel le récipient en matière plastique (10) est soutenu pendant le transport par les deux rouleaux (2, 4),
**caractérisé en ce que**
au moins un rouleau (2, 4) présente un corps de base (22) fabriqué en une première matière, ainsi qu'une couche (24) fabriquée en une autre matière et se différenciant de la première matière, entourant ce corps de base (22) dans son sens circonférentiel, dans lequel cette couche (24) sert de couche de contact pour le contact des récipients en matière plastique (10), dans lequel
- le corps de base (22) présente une matière contenant des fibres de carbone et/ou le corps de base (22) est réalisé comme un corps creux (22),
- les rouleaux (2, 4) présentent dans le mode de travail une vitesse circonférentielle qui est supérieure à 400 tr/min,
- un rapport entre la longueur du rouleau (2, 4) et un diamètre du rouleau (2, 4) est supérieur à 35, et dans lequel
- au moins un rouleau (2, 4) présente un diamètre entre 30 mm et 90 mm.

2. Dispositif (1) selon la revendication 1,
**caractérisé en ce que**
la couche (24) présente une matière plastique traitée par rayonnement et/ou une matière plastique mélangée avec une pluralité de corps sphériques (40).

3. Dispositif (1) selon au moins l'une quelconque des revendications précédentes,
**caractérisé en ce que**
la couche (24) est fabriquée en une matière qui est sélectionnée dans un groupe de matières qui contient du PA, PEEK, POM, UHMW-PE et similaires.

4. Dispositif (1) selon au moins l'une quelconque des revendications précédentes,
**caractérisé en ce que**
la couche (24) est fabriquée en une matière qui contient des polymères fluorés.

5. Dispositif (1) selon au moins l'une quelconque des revendications précédentes,
**caractérisé en ce que**
la couche (24) contient un métal ou est une couche métallique.

6. Dispositif (1) selon au moins l'une quelconque des revendications précédentes,
**caractérisé en ce que**
le corps de base (22) présente une matière plastique renforcée de fibres de verre (GFK).

7. Dispositif (1) selon au moins l'une quelconque des revendications précédentes,
**caractérisé en ce que**
le dispositif (1) présente un dispositif d'éjection (60) pour l'éjection des préformes en matière plastique (10).

8. Rouleau (2, 4) de transport pour un dispositif (1) selon au moins l'une quelconque des revendications précédentes,
**caractérisé en ce que**
le rouleau (2, 4) présente un corps de base (22) fabriqué en une matière plastique, ainsi qu'une couche (24) fabriquée en une autre matière plastique et se différenciant de la première matière plastique, entourant ce corps de base (22) dans son sens circonférentiel, dans lequel cette couche (24) sert de couche de contact pour le contact des récipients en matière plastique (10),
- les rouleaux (2, 4) présentent dans le mode de travail une vitesse circonférentielle qui est supérieure à 400 tr/min,
- un rapport entre la longueur de rouleau (2, 4) et un diamètre du rouleau (2, 4) est supérieur à 35, et dans lequel
- au moins un rouleau (2, 4) présente un diamètre entre 30 mm et 90 mm.

9. Rouleau (2, 4) de transport selon la revendication 8,
**caractérisé en ce que**
le corps de base (22) présente une matière plastique contenant des fibres de carbone et/ou la couche (24) présente une matière plastique traitée par rayonnement et/ou une matière plastique mélangée avec une pluralité de corps sphériques (40).

10. Procédé de transport de préformes en matière plastique, dans lequel les préformes en matière plastique sont transportées entre un premier rouleau (2) tournant au moins temporairement autour de son axe longitudinal (L1) et un second corps porteur (4), dans lequel les préformes en matière plastique sont soutenues pendant leur transport non seulement par le premier rouleau (2) mais aussi par le second corps porteur,
**caractérisé en ce que**
au moins le premier rouleau (2) ou le second corps porteur présente un corps de base (22) fabriqué en une première matière, ainsi qu'une couche (24) fabriquée en une autre matière et se différenciant de la première matière, entourant ce corps de base (22) dans son sens circonférentiel, dans lequel cette couche (24) touche au moins temporairement les préformes en matière plastique pendant leur transport, dans lequel le corps de base (22) présente une matière contenant des fibres de carbone et/ou le corps de base (22) est réalisé comme un corps creux (22), dans lequel
- les rouleaux (2, 4) présentent dans le mode de travail une vitesse circonférentielle qui est supérieure à 400 tr/min,
- un rapport entre la longueur de rouleau (2, 4) et un diamètre du rouleau (2, 4) est supérieur à 35, et dans lequel
- au moins un rouleau (2, 4) présente un diamètre entre 30 mm et 90 mm.

11. Procédé selon la revendication 10,
**caractérisé en ce que**
le second corps porteur (4) est un rouleau (4) qui se tourne au moins temporairement autour de son axe longitudinal (L2).

12. Procédé selon la revendication 10,
**caractérisé en ce que**
la couche (24) présente une matière plastique traitée par rayonnement et/ou une matière plastique mélangée avec une pluralité de corps sphériques (40).

13. Dispositif (1) pour le transport de récipients en matière plastique (10) et en particulier de préformes en matière plastique (10) avec un premier rouleau (2) agencé de manière rotative autour de son axe longitudinal (L1), avec un second rouleau (4) agencé de manière rotative autour de son axe longitudinal (L2), dans lequel le premier rouleau (2) et le second rouleau (4) sont agencés l'un par rapport à l'autre de telle manière qu'entre ces rouleaux (2, 4), les récipients en matière plastique (10) puissent être transportés, dans lequel le récipient en matière plastique (10) est soutenu pendant le transport par les deux rouleaux (2, 4),
**caractérisé en ce que**
au moins un rouleau (2, 4) présente un corps de base (22) fabriqué en une première matière, ainsi qu'une couche (24) fabriquée en une autre matière et se différenciant de la première matière, entourant ce corps de base (22) dans son sens circonférentiel, dans lequel cette couche (24) sert de couche de contact pour le contact des récipients en matière plastique (10), dans lequel la couche (24) présente une matière plastique traitée par rayonnement et/ou une matière plastique mélangée avec une pluralité de corps sphériques (40), dans lequel
- les rouleaux (2, 4) présentent dans le mode de travail une vitesse circonférentielle qui est supérieure à 400 tr/min,
- un rapport entre la longueur de rouleau (2, 4) et un diamètre du rouleau (2, 4) est supérieur à 35, et dans lequel
- au moins un rouleau (2, 4) présente un diamètre entre 30 mm et 90 mm.
